# EUROPÄISCHE PATENTANMELDUNG

(11) **EP 1 470 751 A1**
(43) Veröffentlichungstag der Anmeldung: **27.10.2004**
(21) Anmeldenummer: 03009162.3
(22) Anmeldetag: 22.04.2003
(51) Int. Cl.: A01K 1/015, E04F 15/02, E04F 15/00, D06N 7/00

(54) **Laufgang für Kühe**

(71) Anmelder: Schwarz, Rudolf Dipl.-Ing., 84543 Winhöring (DE)
(72) Erfinder: Schwarz, Rudolf Dipl.-Ing., 84543 Winhöring (DE)
(74) Vertreter: Finck, Dieter, Dr.Ing.

(57) **Zusammenfassung**

Der Laufgang für Kuhe besteht aus einem Boden (10) aus Beton, auf dem ein Flachnetz (20) aus Kunststoff aufgelegt ist, dessen Maschen (25) von Netzstegen (24) begrenzt sind, deren Abstände zwischen 4 und 12 cm liegen und die eine zum Boden (10) senkrechte Höhe (23) von 1 bis 3 mm und eine zum Boden (10) parallele Breite (22) von 3 bis 10 mm haben, wobei das Flachnetz (20) im Bereicht der Kreuzungsstellen der Netzstege (24) im Wesentlichen die gleiche Höhe (23) wie jeder Netzsteg (24) hat.

## Beschreibung

Die Erfindung bezieht sich auf einen Laufgang für Kühe, bestehend aus einem Boden aus Beton oder Asphalt.

Laufgänge für Kühe in Ställen sind in der Regel 2 bis 4 m breit und haben eine Länge von bis zu 100 m und mehr. Solche Laufgänge in Ställen werden mit hoher Frequenz von den Tieren begangen. Durch den Kontakt mit den Hufen der Kühe wird der Beton mit der Zeit sehr glatt, wozu auch das in Zeitabständen erfolgende mechanische Abschaben der Mistrückstände mittels Schieber beiträgt. Bei glattem und insbesondere durch Urin nassen Boden besteht die Gefahr, dass die Kühe ausrutschen. Man ist deshalb gezwungen, den Beton in Zeitabständen mechanisch oder mit Säure aufzurauen oder rau zu machen, beispielsweise mit Sand, was einen hohen Aufwand bedeutet.

Um das Glattwerden des Betons und dessen Wiederaufrauen zu vermeiden, hat man bereits auf den Laufgang Kautschukmatten aufgelegt. Dies ist jedoch von der Kostenseite ein hoher Aufwand. Außerdem verschleißen die Kautschukmatten aufgrund des Laufs der Kühe und der Reinigungsmaßnahmen sehr schnell.

Die der Erfindung zugrunde liegende Aufgabe besteht deshalb darin, den Laufgang für Kühe der eingangs genannten Art so auszugestalten, dass mit einem geringen Zusatzaufwand ein guter Halt für die Hufe der Kühe gewährleistet bleibt.

Diese Aufgabe wird ausgehend von dem Laufgang für Kühe der eingangs genannten Art dadurch gelöst, dass auf den Boden ein Flachnetz aus Kunststoff aufgelegt ist, dessen Maschen von Netzstegen begrenzt sind, deren Abstände zwischen 4 und 12 cm liegen und die eine zum Boden senkrechte Höhe von 1 bis 3 mm und eine zum Boden parallele Breite von 3 bis 10 mm haben, wobei das Flachnetz im Bereich der Kreuzungsstellen der Netzstege im Wesentlichen die gleiche Höhe wie jeder Netzsteg hat.

Ein solcher Laufgang ist leicht mittels Schieber zu reinigen, wobei dieser kontaktfrei über das Flachnetz geführt wird. Durch das Flachnetz ist die Trittsicherheit der Tiere gewährleistet, selbst wenn der Beton im Lauf der Zeit durch den Hufkontakt glatt werden sollte. Bei der Materialbreite der Netzstege von 3 bis 10 mm ist eine ausreichende Festigkeit des Flachnetzes gewährleistet, so dass die Netzstege auch dann, wenn ein Tier stolpern sollte, nicht zerreißen.

Die Auflage des erfindungsgemäßen Flachnetzes ist besonders vorteilhaft auf Böden, in denen bereits Rillen für einen Flüssigkeitsablauf vorgesehen sind, wobei sich die Rillen in Längsrichtung, in Querrichtung oder schräg zum Laufgang erstrecken können.

Ein besonders vorteilhafter Einsatz des Flachnetzes ist dann gegeben, wenn es auf einen Boden aufgelegt wird, der ein aus Betonplatten oder Betonbalken zusammengesetzter Spaltenboden mit 8 bis 14 cm breiten Auftrittsflächen zwischen nach DIN 18908 bemessenen Spalten 14 ist. Ähnliche Spaltenböden sind beispielsweise aus EP 0 956 764 B1, DE 18 82 262 U und DE 295 11 551 U1 bekannt. Die Laufgänge sind dabei aus Platten oder Balken aus Beton zusammengesetzt, die an den Seitenrändernd des Laufgangs abgestützt sind, wobei die Abstützung für einen Abstand zum eigentlichen Stallboden oder einem unter dem Laufsteg befindlichen Wannenboden sorgen, wo die Mistkomponenten gesammelt und abgeführt werden. Die Auftrittsflächen solcher Spaltenböden und die Breiten der Spalte sind bezogen auf Tierart und Hufgröße in DIN 18908 festgelegt.

Bei einer Maschenweite von 4 bis 7 cm ist ein elastischer Lauf der Tiere gewährleistet, ohne dass die Durchlässigkeit für den Mist beeinträchtigt wird. Allerdings ist in diesem Fall die Hufpflege etwas intensiver zu gestalten.

Bei einer Maschenweite von 7 bis 12 cm ist ein ausreichender Kontakt der Huffläche mit der dem Beton zwischen den Maschen gegeben, so dass der erforderliche Hufabrieb gewährleistet bleibt, selbst wenn der Beton im Laufe der Zeit glatt werden sollte.

Bevorzugt werden Flachnetze verwendet, deren Netzstege zueinander senkrecht verlaufen, also quadratische Maschen begrenzen.

Damit das Flachnetz auf dem Boden flach aufliegt, auch wenn die Kühe mit ihren Hufen gegen die Netzstege stoßen, wird das Flachnetz zweckmäßigerweise an den in Längsrichtung seitlichen Rändern des Laufgangs vorzugsweise leicht lösbar festgelegt.

Vorteilhafterweise ist das Flachnetz an einem Ende des Laufgangs an einer Wickelrolle fixiert. Dadurch ist es möglich, für ein Reinigen der Spaltenbodenoberfläche mittels Schabern oder dergleichen die randseitige Fixierung zu lösen und das Netz unter gleichzeitiger Reinigung aufzurollen. Nach dem Reinigen der Oberfläche des Spaltenbodens wird dann das Flachnetz wieder abgerollt und über den Spaltenboden gelegt und seitlich wieder fixiert. Natürlich ist auch ein Reinigen des Laufgangs bei aufgelegtem Netz möglich. In diesem Fall wird der Schieber kontaktfrei zu dem Netz über den Laufgang bewegt.

Vorzugsweise bestehen die Netzstege des Flachnetzes aus einem zähelastischen hochreißfesten und abriebstabilen Kunststoff. Als besonders geeignet erweist sich eine Ausgestaltung eines Flachnetzes, bei dem die Netzstege einen reißfesten Kern haben, der von dem zähelastischen abriebfesten Kunststoff so ummantelt ist, dass die Höhe des Flachnetzes an den Kreuzungsstellen der Netzstege im Wesentlichen der der Netzstege entspricht. Die Kerne sind dabei an ihren Kreuzungen verknüpft. Geeignete Kunststoffe für die Netzstege oder deren Ummantelung sind technische Kunststoffe, vorzugsweise wärmehärtbare Kunststoffe und insbesondere Polyimide oder Polyamide.

Anhand von Zeichnungen werden beispielsweise Ausführungsformen der Erfindung näher erläutert. Es zeigt:
- Fig. 1: eine Draufsicht auf einen Teil eines Laufgangs für Kühe mit einem Betonboden,
- Fig. 2: in einer Draufsicht einen Teil eines Laufgangs für Kühe mit einem Spaltenboden,
- Fig. 3: eine Draufsicht auf einen Teil eines Laufgangs für Kühe mit einem aus Balken zusammengesetzten Spaltenboden und
- Fig. 4: eine geschnittene Seitenansicht des Teils des Laufgangs von Fig. 3.

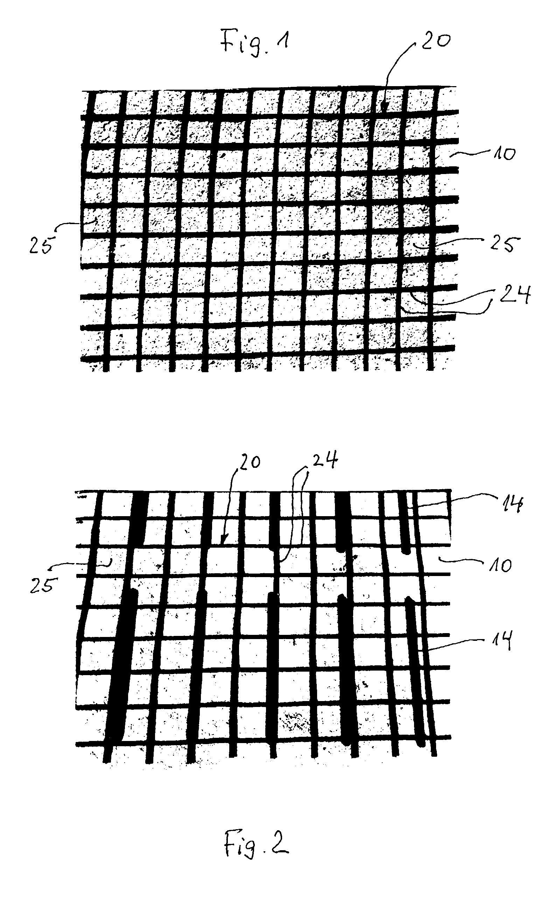

Der in Fig. 1 in einem Ausschnitt gezeigte Laufgang besteht aus einem Boden 10 aus Beton oder Asphalt, auf dem ein Flachnetz 20 flach aufgelegt ist und dessen im Wesentlichen quadratische Machen 25 von Netzstegen 24 begrenzt werden. Das Flachnetz 25 hat im Bereich der Kreuzungsstellen der Stege 24 im Wesentlichen die gleiche zum Boden 10 senkrechte Höhe wie jeder Netzsteg 24.

In der Ausgestaltung von Fig. 2 ist das Flachnetz 20 auf einen Boden 10 in Form eines Spaltenbodens mit zueinander beabstandeten parallelen Spalten 14 aufgebracht.

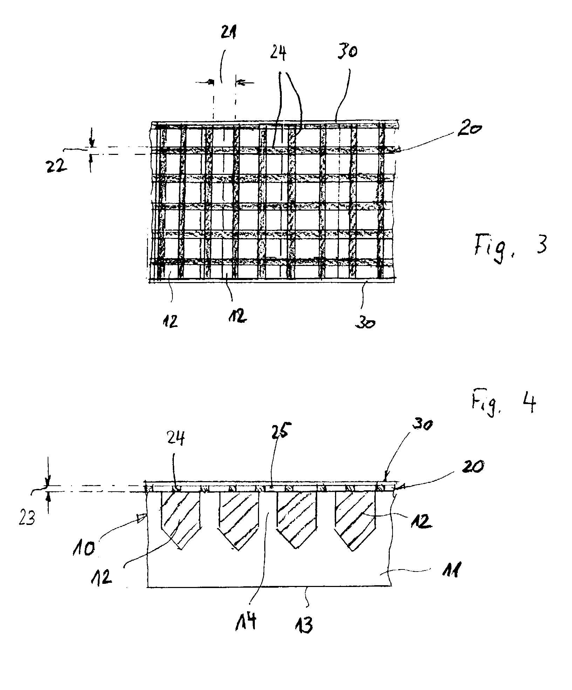

Der in Fig. 3 und 4 in einem Ausschnitt gezeigte Laufgang besteht aus einem Boden 10, der aus Betonbalken 12 zusammengesetzt ist, die unter Bildung von Spalten 14 seitlich durch Abstützungen über dem Stallboden 13 festgelegt sind. Die Auftrittsflächen der Betonbalken 12 und die Breite der Spalte 14, also der Abstand der Betonbalken 12, sind durch DIN 18908 vorgegeben.

Auf dem Boden 10 ist ein Flachnetz 20 aufgelegt, das an den seitlichen Rändern des Laufgangs durch lösbare Halteelemente 30 festgehalten ist.

Das Flachnetz 20 hat wie bei der Ausführung von Fig. 1 und 2 quadratische Maschen 25 mit Netzstegen 21, deren Abstände die Maschenweite 21 bestimmen. Die sich mit gleichbleibender Höhe kreuzenden Netzstege 24 haben eine zum Boden 10 parallele Breite 22 und eine zum Boden 10 senkrechte Höhe 23. Die Weite 21 der Maschen 25, d.h. der Abstand zwischen den Netzstegen 24, liegt zwischen 4 und 12 cm. Die Höhe 23 beträgt 1 bis 3 mm, die Breite 22 liegt bei 3 bis 10 mm.

Das Flachnetz 20 kann auf dem Boden 10 in willkürlicher Zuordnung seiner Maschen 25 zu den Spalten 14 bzw. zu den Auftrittsflächen der Balken 12 aufgelegt werden.

## Patentansprüche

1. Laufgang für Kühe, bestehend aus einem Boden aus Beton oder Asphalt, **dadurch gekennzeichnet, dass** auf den Boden ein Flachnetz (20) aus Kunststoff aufgelegt ist, dessen Maschen (25) von Netzstegen (24) begrenzt sind, deren Abstände zwischen 4 und 12 cm liegen und die eine zum Boden (10) senkrechte Höhe (23) von 1 bis 3 mm und eine zum Boden (10) parallele Breite (22) von 3 bis 10 mm haben, wobei das Flachnetz (20) im Bereich der Kreuzungsstellen der Netzstege (24) im Wesentlichen die gleiche Höhe (23) wie jeder Netzsteg (24) hat.

2. Laufgang nach Anspruch 1, **dadurch gekennzeichnet, dass** der Boden (10) Rillen für einen Flüssigkeitsablauf aufweist.

3. Laufgang nach Anspruch 1, **dadurch gekennzeichnet, dass** der Boden ein aus Betonplatten oder Betonbalken (12) zusammengesetzter Spaltenboden (10) mit 8 bis 14 cm breiten Auftrittsflächen zwischen nach DIN 18908 bemessenen Spalten (14) ist.

4. Laufgang nach einem der Ansprüche 1 bis 3, **dadurch gekennzeichnet, dass** die Netzstege (24) der Maschen (25) einen Abstand von 4 bis 7 cm haben.

5. Laufgang nach einem der Ansprüche 1 bis 3, **dadurch gekennzeichnet, dass** die Netzstege (24) einen Abstand von 7 bis 12 cm haben.

6. Laufgang nach einem der vorhergehenden Ansprüche, **dadurch gekennzeichnet, dass** das Flachnetz (20) an den in Längsrichtung seitlichen Rändern des Laufgangs vorzugsweise lösbar festgelegt (30) ist.

7. Laufgang nach einem der vorhergehenden Ansprüche, **dadurch gekennzeichnet, dass** das Flachnetz (20) an einem Ede des Laufgangs an einer Wickelrolle fixiert ist.

8. Laufgang nach einem der vorhergehenden Ansprüche, **dadurch gekennzeichnet, dass** die Netzstege (24) des Flachnetzes (20) aus einem zähelastischen, hochreißfesten und abriebstabilen Kunststoff besteht.

9. Laufgang nach Anspruch 8, **dadurch gekennzeichnet, dass** die Netzstege (24) einen kreuzungsverknüpften hochreißfesten Kern haben, der von dem zähelastischen abriebstabilen Kunststoff ummantelt ist.

10. Laufgang nach einem der vorhergehenden Ansprüche, **dadurch gekennzeichnet, dass** die Netzstege (24) des Flachnetzes (20) aus Polyamid oder Polyimid bestehen.

11. Laufgang nach einem der vorhergehenden Ansprüche, **dadurch gekennzeichnet, dass** die Netzstege (24) im Wesentlichen quadratisch Maschen (25) begrenzen.
